# EUROPEAN PATENT APPLICATION

(11) **EP 3 939 743 A1**
(43) Date of publication of application: **19.01.2022**
(21) Application number: 21183858.6
(22) Date of filing: 06.07.2021
(51) Int. Cl.: B23Q 3/155, B24B 45/00, B27B 5/32

(54) **OPERATIVE ASSEMBLY FOR A MACHINE TOOL AND MACHINE TOOL COMPRISING SUCH AN OPERATIVE ASSEMBLY**

(30) Priority: 16.07.2020 IT 202000017344
(71) Applicant: SCM Group S.p.A., 47921 Rimini (RN) (IT)
(72) Inventor: BERTUCCIOLI, Alessandro, 47921 Rimini (IT); LOMBARDI, Alessandro, 47921 Rimini (IT); D'AURIA, Marcello, 47921 Rimini (IT)
(74) Representative: Tiburzi, Andrea

(57) **Abstract**

The present invention relates to an operative assembly for a machine tool which is provided with at least one rotating operative member and a control unit for controlling said at least one rotating operative member. Such operative assembly comprises: at least one operative member (15, 15', 115) for performing at least one operation on a workpiece; and an interconnection device (1, 101) comprising coupling means (3) for being removably coupled, when in use, with said at least one rotating operative member; and motion transmission means (4, 5, 6; 105) for transmitting, when in use, a rotatory motion from said at least one rotating operative member to said at least one operative member (15, 15', 115). The above mentioned operating assembly also comprises connecting means (8, 12, 14, 18; 108, 114) for removably connecting said at least one operative member (15, 15', 115) with said interconnection device (1, 101). Said interconnection device (1, 101) is configured to receive, when in use, at least one signal from said control unit to automatically cause said at least one operative member (15, 15', 115) to be uncoupled from said interconnection device (1, 101) by deactivating said connecting means (8, 12, 14, 18; 108, 114).

## Description

The present invention relates to an operative assembly for a machine tool.

More in detail, the invention relates to an operative assembly for a machine tool equipped with a rotary operating member, in which this operative assembly can comprise a tool and be connected, in a removable way, to the rotary operating member of the machine tool.

The invention also refers to a machine tool comprising such an operative assembly.

In particular, the operative assembly, object of the present invention, performs the function of allowing the quick assembly and disassembly of the relevant tools.

In the following, the description will be directed to an operative assembly having a saw blade, but it is clear that the same should not be considered limited to this specific tool, since the same operative assembly may also include other types of tools or operating members, such as for example a drill or a cutter.

Machine tools are known that are equipped with operating heads carrying an electrospindle rotatable around at least one axis, typically two (bi-rotary heads), and an interconnection unit for transferring the rotary motion of the electrospindle to one or more tools arranged, in particular, opposed to each other.

However, in these known machine tools the operations required for replacing the tool in the relative operating head are rather complex and difficult to perform.

In fact, in these machines, for the assembly and disassembly of the working tools, the intervention of an operator is required, who manually carries out the operations necessary to replace the tools in the machine.

Furthermore, traditional machine tools are normally structured in such a way as not to allow the replacement of each individual tool, but only of the entire operative assembly to house the various tools necessary for the machining.

In light of the above, it is, therefore, an object of the present invention to provide an operative assembly for a machine tool, which allows the tool replacement operations to be carried out in a simple and fast manner.

Another object of the invention is to provide an operative assembly for a machine tool, which allows the tool replacement operations to be carried out in a completely automatic way.

Therefore, a specific object of the present invention forms an operative assembly for a machine tool equipped with at least one rotary operating member and a control unit for controlling said at least one rotary operating member, said operative assembly comprising: at least one operating member which can be coupled, in the using at least one tool in a removable way to perform at least one operation on a piece; an interconnection device comprising: coupling means for coupling, in use, to said at least one rotary operating member in a removable manner; and motion transmission means for transmitting, in use, a rotary motion from said at least one rotary operating member to said at least one operating member; connection means for removably connecting said at least one operating member to said interconnection device; wherein said interconnection device is configured to receive, in use, at least one signal from said control unit to automatically control the decoupling of said at least one operating member from said interconnection device by deactivating said connecting means.

Advantageously according to the invention, said connection means can comprise mechanical connection means.

Preferably according to the invention, said mechanical connection means comprise form connection means.

Further according to the invention, said shape connection means can be movable between a constraint position, in which they constrain said at least one operating member to said interconnection device, and a release position, in which said at least one operating member and said interconnection device are mutually released.

Conveniently according to the invention, said shape connection means can be operated by at least one compressed air flow.

Preferably according to the invention, said connection means comprise a coupling member identified in said at least one operating member and a connection device identified in said interconnection device and configured to be coupled in a removable manner to said coupling member; said connection device being movable between a constraint position, in which it is coupled to said coupling member of said at least one operating member, and a release position, in which it is decoupled from said coupling member of said at least one operating member.

Advantageously according to the invention, said connection device can comprise elastic means for keeping said connection device in said constraint position.

Preferably according to the invention, said connection device comprises a protruding element, in which at least one external cavity is formed, and at least one locking element which in said constraint position of said connection device is arranged outside said at least one external cavity and interacts with said coupling member of said at least one operating member, and in said release position of said connection device occupies said at least one external cavity without interacting with said coupling member of said at least one operating member.

Conveniently according to the invention, said blocking element can be a sphere.

Further according to the invention, said interconnection device and said at least one operating member may comprise, respectively, a first toothing and a second toothing mutually coupled in such a way as to allow the transmission of a torque when said first toothing and said second toothing are mutually coupled.

Preferably according to the invention, in an area adjacent to said connection device and opposite to said at least one operating member with respect to said connection device, there is provided a chamber, with variable volume, opening to the outside of said interconnection device through at least one passage adapted to receive, in use, at least one flow of compressed air to move said connection device from said restraining position to said release position.

Further according to the invention, said at least one passage can be formed in said protruding element of said connection device.

The present invention also relates to a machine tool comprising a base, a work surface arranged above said base, a crosspiece, at least one operating head connected to said crosspiece and comprising an electrospindle movable in at least three directions, and an operative assembly as above. indicated.

Advantageously according to the invention, said machine tool can comprise an operative assembly, in which said at least one passage is formed in said protruding element of said connection device, and an inlet device for introducing compressed air into said at least one passage.

Alternatively, according to the invention, said machine tool can comprise an operative assembly as indicated above, and said at least one operating head can be provided with a compressed air system, and said connection means can be in fluid communication with said air system. compressed, in such a way as to allow the deactivation of said connection means by sending a flow of compressed air from said compressed air system to said connection means.

The present invention will be now described, for illustrative but not limitative purposes, according to its preferred embodiments, with particular reference to the figures of the enclosed drawings, wherein:
figure 1 is a first axonometric view of an operative assembly for a machine tool, according to a first embodiment of the present invention, comprising a saw blade;
figure 2 is a second axonometric view of the operative assembly shown in figure 1;
figure 3 is a side view of the operative assembly of figures 1 and 2, in which some components have been hidden to show others;
figure 4 is a side view of the operative assembly of figures 1-3, associated with a device for disassembling a tool of such operative assembly;
figure 5 is a front view of what is shown in figure 4;
figure 6 is a sectional view along the section line A-A indicated in figure 5;
figure 7 shows a first operating step for replacing a tool or other member in the operative assembly shown in figures 1-6;
figure 8 is a partial sectional view taken from figure 7;
figure 9 is a partial sectional view, in which a second operating step is shown for replacing a tool or other member in the operative assembly shown in figures 1-6;
figure 10 is a sectional view, in which a third operating step is shown for replacing a tool or other member in the operative assembly shown in figures 1-6;
figure 11 is a sectional view, in which a fourth operating step is shown for replacing a tool or other member in the operative assembly shown in figures 1-6;
figure 12 is a sectional view, in which a fifth operating step is shown for replacing a tool or other member in the operative assembly shown in figures 1-6;
figure 13 is a sectional view, in which a sixth operating step is shown for replacing a tool or other member in the operative assembly shown in figures 1-6;
figure 14 is a sectional view, in which a seventh operating step is shown for replacing a tool or other member in the operative assembly shown in figures 1-6;
figure 15 is a first axonometric view of an operative assembly for a machine tool according to a second embodiment of the present invention, comprising a saw blade;
figure 16 is a second axonometric view of the operative assembly shown in figure 15;
figure 17 is a front view of the operative assembly shown in figures 15 and 16;
figure 18 is a sectional view along the section line B-B indicated in Figure 17; and
figure 19 is a sectional view along the section line C-C indicated in figure 17.

In the various figures similar parts will be indicated with the same numerical references.

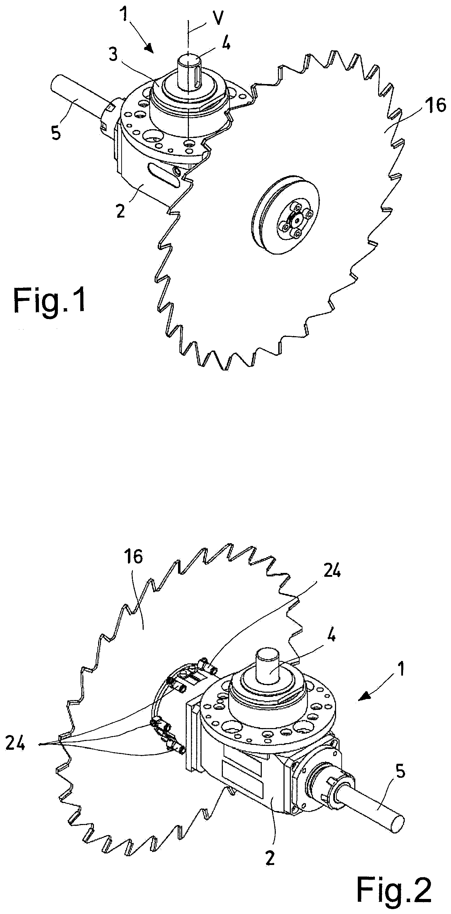

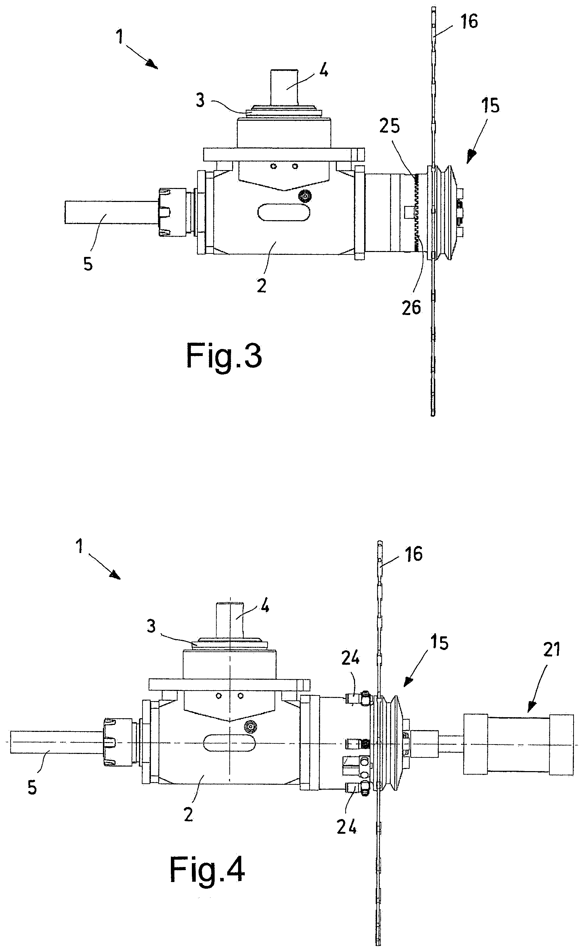

With reference to figures 1-14, with 1 it is indicated an interconnection device to be mounted on a rotary operating member, in particular an electrospindle of an operating head of a machine tool.

For example, this interconnection device 1 can be conveniently mounted on a work center, namely a machine tool equipped with at least one mobile operating head above a work surface, where the workpiece to be machined is fixed.

In particular, the interconnection device 1 comprises an outer casing 2, above which there is an upper attachment 3 to allow the removable coupling to an electrospindle (not shown in the figures).

In the interconnection device 1 there is a vertical shaft 4, projecting above the upper attachment 3, and intended to be rotated around its own axis V by virtue of the rotary motion provided by the electrospindle.

The interconnection device 1 also comprises a horizontal shaft 5, rotatable around its axis H, and connected to the vertical shaft 4 by means of a transmission member 6, in particular by gears, located inside the outer casing 2, to transform the rotating motion of the vertical shaft 4 about its vertical V axis, in a rotation of the horizontal shaft 5 about its horizontal axis H.

For example, the aforementioned gear transmission member 6 can comprise bevel gears to transform the vertical axis rotary motion of the vertical shaft 4 into a horizontal axis rotary motion of the horizontal shaft 5.

An open cavity 7 is obtained in one of the two ends of the horizontal shaft 5, in which a connection member 8 is housed for the removable connection of a tool, such as for example a saw blade, or another member.

This connection member 8 is coaxial and aligned with the aforementioned horizontal shaft 5 according to the horizontal axis H.

In particular, this connection member 8 comprises an enlarged portion 9, arranged inside the cavity 7, and a narrow portion 10, which extends from said enlarged portion 9 along the horizontal axis H so as to project from the outer casing 2.

A circumferential groove 11 is formed in correspondence with an intermediate region of the restricted portion 10 of the connecting member 8, the function of which will be better specified in the following description.

Through the connection member 8 a through hole 8' develops, along the horizontal axis H, opening, on one side, on the free end 8" of the connection member 8 and, on the opposite side, in the cavity area 7 behind this connection member 8.

In the cavity 7 there is also a spring 12, arranged in such a way as to constantly push the enlarged portion 9 of the connection member 8 against an abutment wall 13 obtained in the horizontal shaft 5 and perpendicular to the horizontal axis H, i.e., towards the inside of the outer casing 2.

The end of the horizontal shaft 5, where the connection member 8 is mounted, is configured in such a way as to form at least one cavity adjacent to this connection member 8, in which at least one locking ball 14 is located.

In the interconnection device 1 a first circular toothing 25 is also provided, integral with the horizontal shaft 5 and arranged around the connection member 8 in a coaxial position with respect to the latter along the horizontal axis H.

The teeth of this first toothing 25 face outwards, namely on the opposite side with respect to said transmission member 6, and each has a substantially triangular or trapezoidal profile.

A removable member 15 can be removably coupled to the connection member 8, possibly carrying a tool such as for example a saw blade 16.

A shaped through cavity 17 is obtained in the removable member 15 to receive the restricted portion 10 of the connecting member 8.

Specifically, the aforementioned through cavity 17 has a first narrow end zone 17a formed by an end portion 18 of the removable member 15 projecting inside the through cavity 17, a second enlarged intermediate zone 17b, adjacent to the first end zone 17a, and a third restricted end zone 17c arranged on the opposite side of the first end zone 17a with respect to the second intermediate zone 17b, so that in the through cavity 17 of the removable member 15 a first shoulder 19 is formed between the first zone end 17a and the second intermediate zone 17b and a second shoulder 20 between the second intermediate zone 17b and the third end zone 17c.

Furthermore, a second circular toothing 26 is provided in the removable member 15, arranged around the through cavity 17 in a coaxial position with respect to the latter and having the same diameter as the aforementioned first toothing 25 provided in the interconnection device 1.

The teeth of this second toothing 26 face outwards and also have a substantially triangular or trapezoidal profile, so as to be able to couple to the teeth of the first toothing 25.

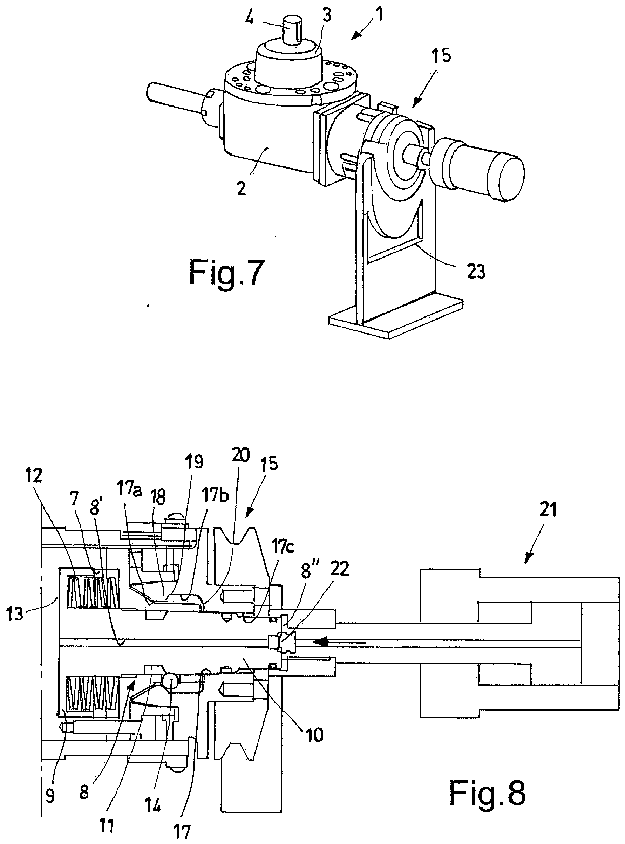

Therefore, given the particular shape of the removable member 15, the coupling between the latter and the connecting member 8 is achieved through the mutual engagement of the above-mentioned first toothing 25 and second toothing 26, which allows the transmission of the torque from the horizontal shaft 5 to the removable member 15, and also due to the blocking action with respect to the horizontal axis H operated by the abutment between said first shoulder 19 and the locking ball 14 (see figure 8).

In the interconnection device 1 there are also sensor members, for example, proximity sensors, to detect the presence of the removable member 15 when the latter is coupled to the connection member 8.

The interconnection device 1 also comprises blowing members 24 configured to direct compressed air flows towards the first toothing 25 of the interconnection device 1, to remove any scraps on said first toothing 25 and possibly also on the second toothing 26 of the removable member 15 during the coupling step of the latter to the interconnection device 1.

On the other end of the horizontal shaft 5, i.e., the one opposite to the connection member 8, it is possible to mount a further tool, for example, a cutter or a drill bit, to perform further machining on the workpiece or an additional removable member 15 of the type described above providing, also on this side of the interconnection device 1, the same components indicated above to achieve the coupling with the removable member 15.

The aforementioned machine tool also comprises a mobile compressed air device 21 provided with an outlet 22 for the emission of compressed air.

The same machine tool also comprises a support 23 for supporting the removable member 15 from the bottom during its coupling and uncoupling steps with the connection member 8.

Said support 23 can therefore also operate as a magazine for the same removable member 15.

The compressed air device 21 is operatively connected to the control unit of the machine tool, which will then determine its operation and displacements.

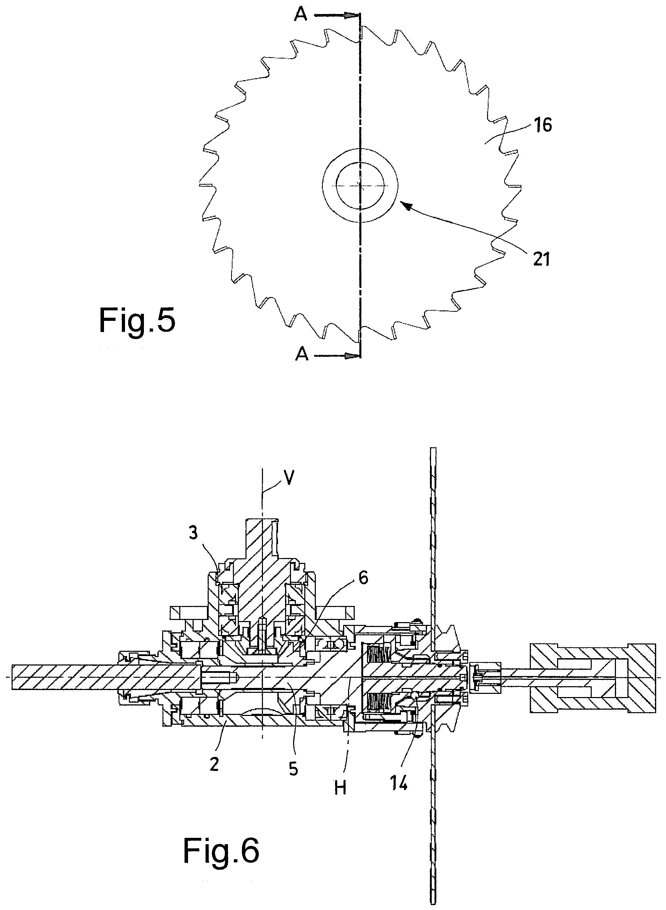

In case the removable member 15 has to be decoupled from the connection member 8, for example to replace the working tool, it is proceeded as shown in figures 6-14, i.e., by bringing the removable member 15 mounted on the device closer to the support 23 interconnection 1 and releasing it, from above, onto the same support 23, and also bringing the outlet 22 of the compressed air device 21 into contact with the free end 8" of the connection member 8, to introduce compressed air into the through hole 8' (see figs . 7 and 8).

The activation of the compressed air device 21 for introducing compressed air into the through hole 8' is arranged by means of a signal transmitted by the aforementioned control unit.

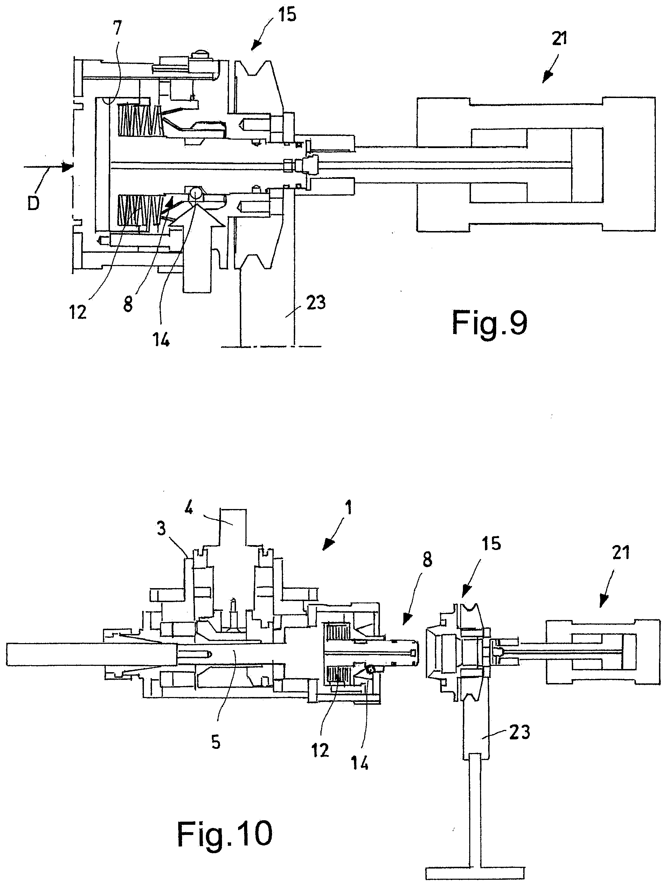

When the compressed air reaches the area of the cavity 7 behind the connection member 8, i.e., the empty area between the aforementioned abutment wall 13 of the horizontal shaft 5 and the enlarged portion 9 of the connection member 8, the same compressed air pushes the latter in the direction D towards the removable member 15, which remains stationary, overcoming the resistance of the spring 12, and causing the aforementioned circumferential groove 11 to reach the locking ball 14, which can in this way occupy the circumferential groove 11 thus determining the decoupling between the removable member 15 and the connecting member 8 (see fig. 9).

Following this decoupling, it is possible to move the operating head of the machine tool so as to make the interconnection device 1 retract along the horizontal axis H, to separate it from the removable member 15 (see figure 10).

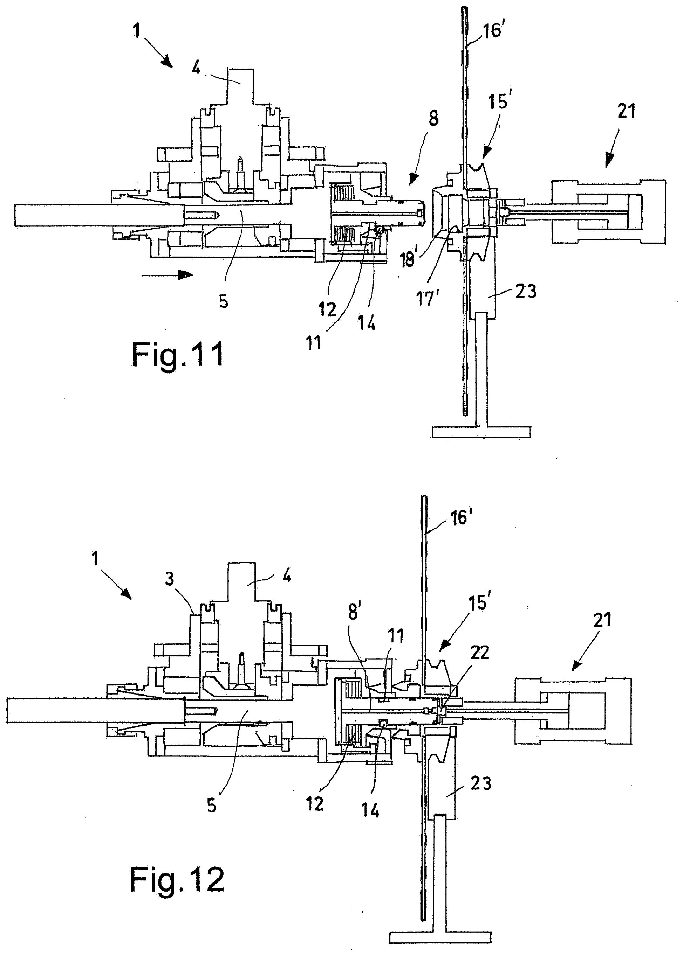

At this point, to connect another removable member 15' to the connection member 8, the same as the one described above and provided with a tool such as a saw blade 16', the interconnection device 1 approaches this removable member 15' making the connection member 8 enter the through cavity 17' of the removable member 15' until the free end 8" of the connection member 8 comes into contact with the outlet 22 of the compressed air device 21, thus allowing the latter to introduce compressed air into the through hole 8' of the connection member 8 (see figures 11 and 12).

This compressed air flow will cause, similarly to what has been described above, the displacement of the locking ball 14 into the relative release position, i.e., in the circumferential groove 11 of the connection member 8 (see figure 12).

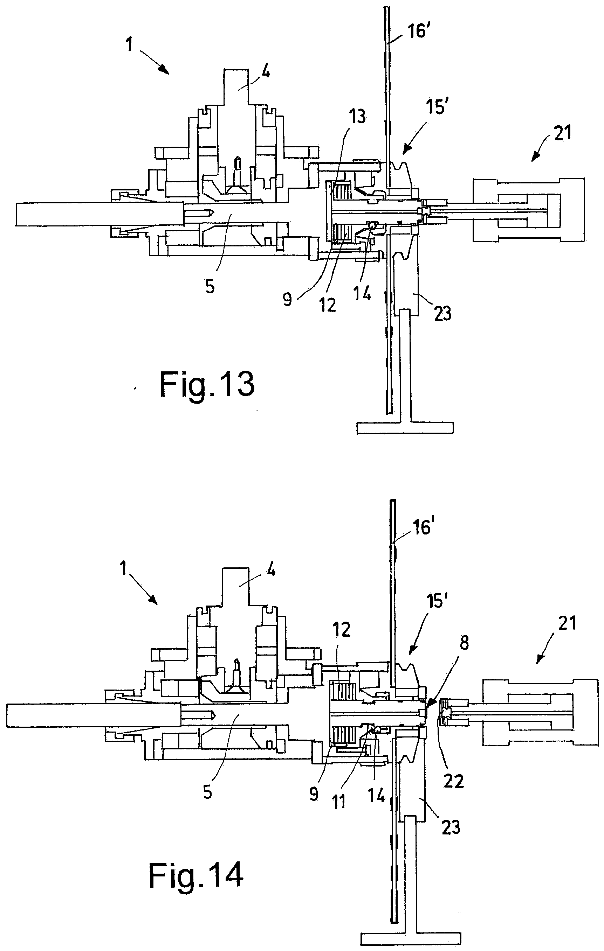

At this point, with the locking ball 14 in the unlocked position, the interconnection device 1 will also be able to complete the final part of the approaching stroke to the removable member 15' (see figure 13), at the end of which the compressed air device 21 will interrupt the emission of compressed air moving away from the removable member 15', thus allowing the enlarged portion 9 of the connection member 8 to return to abut with the abutment wall 13, due to the action of the spring 12, and to the locking ball 14 to return to the relative constraint position, in which the interconnection device 1 and the removable member 15' will be mutually coupled (see figure 14).

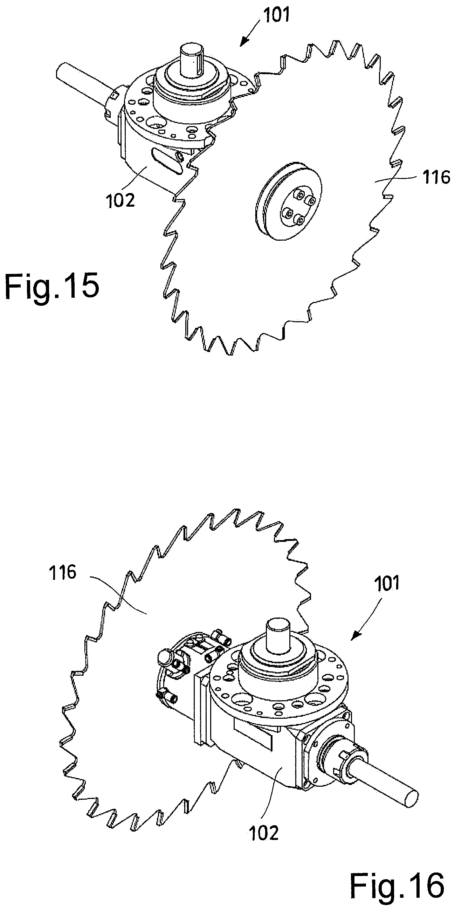

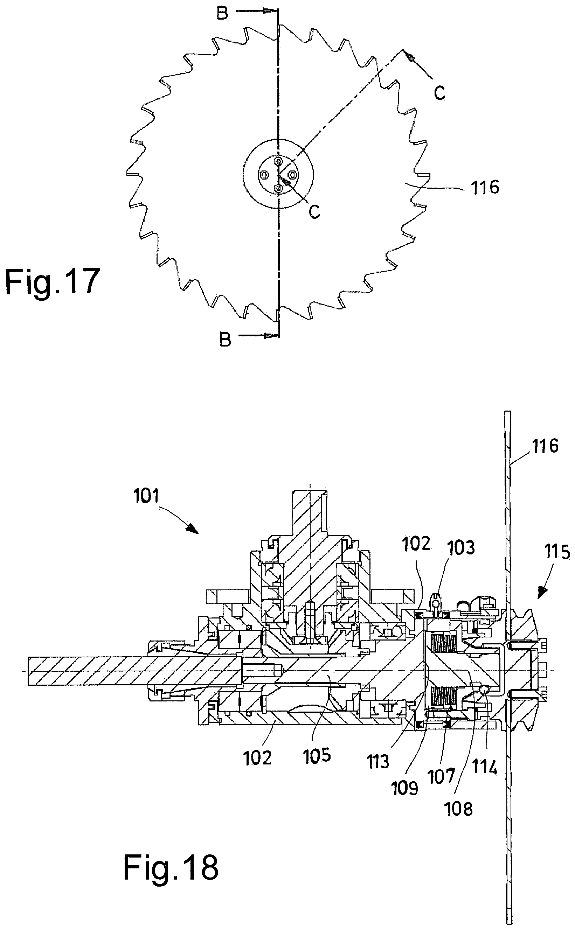

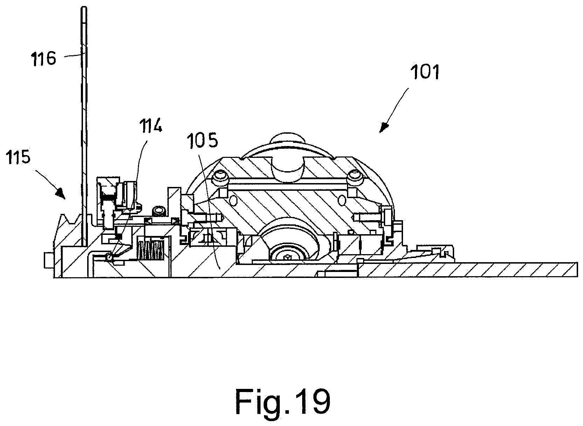

Figures 15-19 instead show a second interconnection device 101 according to a second embodiment of the invention.

This second interconnection device 101 is substantially identical to the interconnection device 1 described above, except for the presence, on the outer casing 102, of a connector 103 for the connection to a compressed air system (not shown), preferably the system with compressed air, which is normally supplied with the operating head of the machine tool.

In particular, this connector 103 is in fluid communication with the area of the cavity 107 behind the connection member 108, i.e., the empty area between the abutment wall 113 of the horizontal shaft 105, and the enlarged portion 109 of the connection 108.

In the second interconnection device 101, the decoupling between the removable member 115 with the relative saw blade 116 and the connecting member 108 is obtained by introducing into the connector 103, through the aforementioned compressed air system, compressed air, which, once reached the aforementioned area behind the same connection member 108 will cause the latter to move towards the removable member 115, which remains stationary, and the consequent removal of the block made by the locking ball 114 on the same removable member 115 in the same manner described above.

The aforementioned compressed air system is operationally connected to the control unit of the machine tool, namely to a controller, and activated automatically by this unit, to introduce compressed air into the connector 103, for example when it is necessary to replace the tool in use with another tool.

Also in this case, therefore, the activation of the aforesaid compressed air system for introducing compressed air into the connector 103 is arranged by means of a suitable signal transmitted by the control unit of the machine tool to the interconnection device 101.

As can be seen from the above description, the interconnection device object of the present invention allows performing, in a completely automatic way, all the operations necessary for the replacement of the working tool, since no external intervention by an operator is required.

The same interconnection device also allows these operations to be carried out quickly and easily, thus minimizing downtime, i.e., the times in which the machine tool is not operational.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Operative assembly for a machine tool which is provided with at least one rotating operative member and a control unit for controlling said at least one rotating operative member, said operative assembly comprising:
- at least one operative member (15, 15', 115) removably coupleable, in use, to at least a tool (16, 16', 116), for performing at least one operation on a workpiece;
- an interconnection device (1, 101) comprising:
coupling means (3) for being removably coupled, when in use, with said at least one rotating operative member; and
motion transmission means (4, 5, 6; 105) for transmitting, when in use, a rotatory motion from said at least one rotating operative member to said at least one operative member (15, 15', 115);
- connecting means (8, 12, 14, 18; 108, 114) for removably connecting said at least one operative member (15, 15', 115) with said interconnection device (1, 101);
wherein said interconnection device (1, 101) is configured to receive, when in use, at least one signal from said control unit to automatically cause said at least one operative member (15, 15', 115) to be uncoupled from said interconnection device (1, 101) by deactivating said connecting means (8, 12, 14, 18; 108, 114).

2. Operative assembly according to claim 1, **characterized in that** said connecting means (8, 12, 14, 18; 108, 114) comprise mechanical connection means.

3. Operative assembly according to claim 2, **characterized in that** said mechanical connection means comprise shape connection means.

4. Operative assembly according to claim 3, **characterized in that** said shape connection means are movable between a constraint position, where they fasten said at least one operative member (15, 15', 115) to said interconnection device (1, 101), and a disengaging position, where said at least one operative member (15, 15', 115) and said interconnection device (1, 101) are disengaged from each other.

5. Operative assembly according to claim 4, **characterized in that** said shape connection means are activable by at least one compressed air flow.

6. Operative assembly according to any one of preceding claims, **characterized in that** said connecting means (8, 12, 14, 18; 108, 114) comprise a fastening member (18) which is located in said at least one operative member (15, 15', 115) and a connecting device (8, 12, 14; 108, 114) which is located in said interconnection device (1, 101) and configured to be removably coupled to said fastening member (18); said connecting device (8, 12, 14; 108, 114) being movable between a constraint position, where it is coupled to said fastening member (18) of said at least one operative member (15, 15', 115), and a disengaging position, where it is uncoupled from said fastening member (18) of said at least one operative member (15, 15', 115).

7. Operative assembly according to claim 6, **characterized in that** said connecting device (8, 12, 14; 108, 114) comprises elastic means (12) to keep said connecting device (8, 12, 14; 108, 114) in said constraint position.

8. Operative assembly according to claim 6 or 7, **characterized in that** said connecting device (8, 12, 14; 108, 114) comprises a projecting element (8), where at least one outer cavity (11) is formed, and at least one locking element (14; 114) which, in said constraint position of said connecting device (8, 12, 14; 108, 114), is placed outside said at least one outer cavity (11) and interacts with said fastening member (18) of said at least one operative member (15,15', 115), and, in said disengaging position of said connecting device (8, 12, 14; 108, 114), occupies said at least one outer cavity (11) without interacting with said fastening member (18) of said at least one operative member (15, 15', 115).

9. Operative assembly according to claim 8, **characterized in that** said locking element (14; 114) is a ball.

10. Operative assembly according to any one of preceding claims, **characterized in that** said interconnection device (1, 101) and said at least one operative member (15, 15', 115) respectively comprise a first toothing (25) and a second toothing (26) which are connectable with each other such as to allow a torque to be transmitted when said first toothing (25) and said second toothing (26) are connected with each other.

11. Operative assembly according to any one of claims 6 to 9, **characterized in that** in a zone which is adjacent to said connecting device (8, 12, 14; 108, 114) and on the other side of said at least one operative member (15, 15'; 115) with respect to said connecting device (8, 12, 14; 108, 114) is provided a chamber with a variable volume, which is connected with the outside of said interconnection device (1, 101) through at least one passage (8') which is configured to receive, when in use, at least one compressed air flow to make said connecting device (8, 12, 14; 108, 114) move from said constraint position to said disengaging position.

12. Operative assembly according to claims 8 and 11, **characterized in that** said at least one passage (8') is formed in said projecting element (8) of said connecting device (8, 12, 14).

13. Machine tool comprising a base, a working plane placed above said base, a crosspiece, at least one operative head which is connected with said crosspiece and comprises an electrospindle being movable in at least three directions, and an operative assembly according to any one of preceding claims.

14. Machine tool according to claim 13, comprising an operative assembly according to claim 12, **characterized in that** it comprises an introduction device (21) for introducing compressed air into said at least one passage (8').

15. Machine tool according to claim 13, comprising an operative assembly according to any one of claims 1 to 11, **characterized in that** said at least one operative head is provided with a compressed air system, and **in that** said connecting means (108, 114) are in fluid communication with said compressed air system such as to allow said connecting means (108, 114) to be deactivated by transmitting a compressed air flow from said compressed air system to said connecting means (108, 114).
